# EUROPEAN PATENT APPLICATION

(11) **EP 3 683 444 A1**
(43) Date of publication of application: **22.07.2020**
(21) Application number: 19216448.1
(22) Date of filing: 16.12.2019
(51) Int. Cl.: F04C 18/02, F04C 27/00

(54) **MOTOR OPERATED COMPRESSOR**

(30) Priority: 18.01.2019 KR 20190007020
(71) Applicant: LG Electronics Inc., SEOUL, 07336 (KR)
(72) Inventor: PARK, Ilyoung, 08592 Seoul (KR); CHOI, Yicheol, 08592 Seoul (KR); JOO, Sanghyun, 08592 Seoul (KR); LIM, Junyoung, 08592 Seoul (KR)
(74) Representative: Vossius & Partner Patentanwälte Rechtsanwälte mbB

(57) **Abstract**

The present disclosure relates to a motor operated compressor, including an orbiting scroll (1142) that defines a compression chamber (V) together with a fixed scroll (1141), and performs an orbiting movement with respect to the fixed scroll to compress a fluid; a main frame (1150) disposed to support the orbiting scroll to perform an orbiting movement and disposed at a side opposite to the fixed scroll around the orbiting scroll to define a back-pressure chamber (S4) together with the orbiting scroll; a groove (1142e) disposed in either one of the orbiting scroll and the main frame to face the other one of the orbiting scroll and the main frame, and defined in a closed curved shape around the back-pressure chamber; a first sealing member (1171) inserted into the groove to seal the back-pressure chamber; and a second sealing member (1172) inserted into the groove to elastically press the first sealing member to be brought into close contact with the orbiting scroll or the main frame, wherein a distance (a) between an outer wall of the groove and the first sealing member in a radial direction of the first sealing member is 6 to 8% (0.06 ≦ a/W ≦ 0.08) of a difference between an outer radius (OR) and an inner radius (IR) of the first sealing member (W = OR - IR).

## Description

### TECHNICAL FIELD

The present disclosure relates to a motor operated compressor driven by a motor.

### BACKGROUND

Compressors are divided into mechanical type compressors using an engine as a driving source and electric type compressors using a motor as a driving source.

As a motor operated compressor, a scroll compression method suitable for a high compression ratio operation is widely known. An electric motor unit composed of a drive motor is provided within a sealed casing of a scroll compression type motor operated compressor (hereinafter, abbreviated as a motor operated compressor in this specification). Furthermore, a compression unit including a fixed scroll and an orbiting scroll is provided at one side of the electric motor unit. The electric motor unit and the compression unit are connected to the rotary shaft. A rotational force of the electric motor unit is transmitted to the compression unit through the rotary shaft. Furthermore, the compression unit compresses a fluid such as refrigerant while changing a volume of compression chamber using a rotational force received through the rotary shaft.

An example of such a motor operated compressor is shown in Japanese Patent Publication No. 5817760 (October 9, 2015). In the above prior document, a resin member 52 and a rubber member 53 are used to seal a back-pressure chamber between a partition wall 21 and a movable scroll 23. Such a structure may be used without any big problem in a motor operated compressor using low pressure refrigerant as a fluid subjected to compression. This is because a pressure difference between the inside and the outside of a sealing portion such as the resin member 52 and the rubber member 53 is small.

However, in a motor operated compressor using high pressure refrigerant such as carbon dioxide as a fluid subjected to compression, the differential pressure between the inside and the outside of the sealing portion is very large. Therefore, a problem that does not occur in a motor operated compressor using low pressure refrigerant as a fluid subjected to compression is newly generated.

For instance, under high pressure conditions, pinching may occur due to the deformation of members constituting the sealing portion, or the sealing performance of the back-pressure chamber may be deteriorated due to a positional change of the members.

### SUMMARY

One aspect of the present disclosure is to propose a structure in which the deterioration of the back-pressure chamber sealing performance does not occur in a motor operated compressor using high pressure refrigerant as a fluid subjected to compression.

Another aspect of the present disclosure is to provide a motor operated compressor that does not lose durability even during a long-time compression operation through a tolerance setting between the members of the sealing portion.

Still another aspect of the present disclosure is to provide a motor operated compressor having a structure capable of preventing pinching or positional change of members constituting the sealing portion.

In order to achieve an object of the present disclosure, a motor operated compressor according to an embodiment of the present disclosure may include an orbiting scroll and a main frame coupled to each other to form a back-pressure chamber; a groove disposed on at least one of the orbiting scroll and the main frame; and a first sealing member and a second sealing member inserted into the groove to seal the back-pressure chamber.

The motor operated compressor may include a first sealing member inserted into the groove to seal the back-pressure chamber; and a second sealing member inserted into the groove to elastically press the first sealing member to be brought into close contact with the orbiting scroll or the main frame, wherein a distance (a) between an outer wall of the groove and the first sealing member in a radial direction of the first sealing member is 6 to 8% (0.06 ≦ a/W ≦ 0.08) of a difference between an outer radius (OR) and an inner radius (IR) of the first sealing member (W = OR - IR).

The orbiting scroll may define a compression chamber together with a fixed scroll, and performs an orbiting movement with respect to the fixed scroll to compress a fluid.

The main frame may be disposed to support the orbiting scroll to perform an orbiting movement and disposed at a side opposite to the fixed scroll around the orbiting scroll so as to define a back-pressure chamber together with the orbiting scroll.

The groove may be disposed in either one of the orbiting scroll and the main frame to face the other one of the orbiting scroll and the main frame, and defined in a closed curved shape around the back-pressure chamber.

The groove may include a first groove and a second groove having different axial depths.

The first groove may be recessed in a direction away from one of the orbiting scroll and the main frame on one surface of the other one of the orbiting scroll and the main frame.

The second groove may be recessed on the first groove in the same direction as the recess direction of the first groove, and disposed to have an outer diameter different from that of the first groove.

The first sealing member may be inserted into the first groove, and the second seal member may be inserted into the second groove.

An outer diameter of the first groove may be greater than that of the second groove.

An inner diameter of the first groove may be the same as that of the second groove.

A fluid subject to compression in the motor operated compressor may include carbon dioxide.

The first sealing member may be made of engineering plastic.

The first sealing member may be made of polyetherether ketone (PEEK).

The first sealing member may be made of polytetrafluoroethylene (PTFE).

The first sealing member may be defined in a closed curved annular shape.

The second sealing member may be made of rubber.

The second sealing member may be made of fluorine rubber.

The second sealing member may be made of fluorine rubber corresponding to a material symbol FKM of the ASTM 1418 standard among fluorine rubbers.

The second sealing member may have a Brinell hardness (HB) of 70 to 100.

### BRIEF DESCRIPTION OF THE DRAWING

The accompanying drawings, which are included to provide a further understanding of the disclosure and are incorporated in and constitute a part of this specification, illustrate one or more implementations of the disclosure and together with the description serve to explain the principles of the disclosure.
FIG. 1 is a perspective view showing an example of a motor operated compressor proposed in the present disclosure.
FIG. 2 is a cross-sectional view of a compression module illustrated in FIG. 1.
FIG. 3 is a partially exploded perspective view illustrating a configuration of the compression module illustrated in FIG. 2.
FIG. 4 is a cross-sectional view of portion "A" illustrated in FIG. 2.
FIGS. 5 and 6 are cross-sectional views for explaining the problem of a motor operated compressor that does not have a structure proposed in the present disclosure.

### DETAILED DESCRIPTION

Hereinafter, an electromotive compressor associated with the present disclosure will be described in detail with reference to the accompanying drawings.

Even in different embodiments according to the present disclosure, the same or similar reference numerals are designated to the same or similar configurations, and the description thereof will be substituted by the earlier description.

It will be understood that when an element is referred to as being "connected with" another element, the element can be directly connected with the other element or intervening elements may also be present. On the contrary, in case where an element is "directly connected" or "directly linked" to another element, it should be understood that any other element is not existed therebetween.

A singular representation used in the present specification may include a plural representation as far as it represents a definitely different meaning from the context.

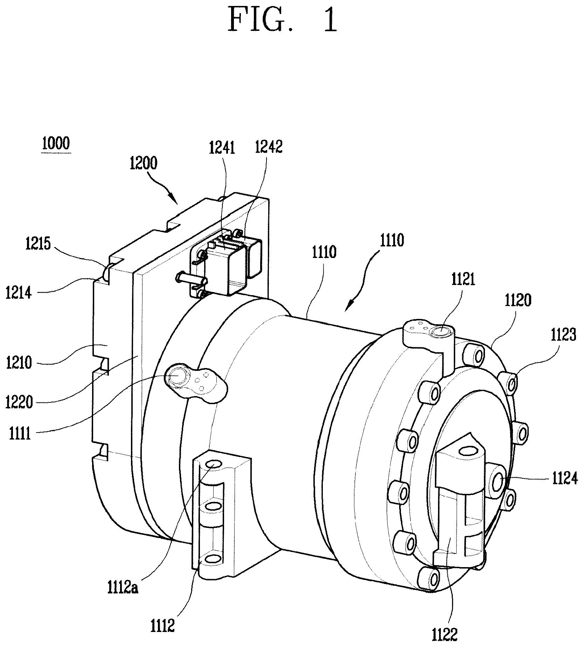

FIG. 1 is a perspective view showing an appearance of a motor operated compressor provided in the present disclosure.

The motor operated compressor 1000 includes a compression module 1100 and an inverter module 1200.

The compression module 1100 refers to a set of components for compressing a fluid such as refrigerant. The inverter module 1200 refers to a set of components for controlling the driving of the compression module 1100. The inverter module 1200 may be coupled to one side of the compression module 1100. When directivity is set based on the flow of fluid compressed by the motor operated compressor 1000, one side of the compression module 1100 refers to a front side of the compression module 1100. A fluid subjected to compression is introduced into an intake port 1111 and discharged to a discharge port 1121, and thus the inverter module 1200 disposed close to the intake port 1111 may be described as being coupled to the front side of the compression module 1100.

The appearance of the compressor module 1100 is defined by a main housing 1110 and a rear housing 1120.

The main housing 1110 has a hollow cylindrical pillar, a polygonal pillar, or a similar appearance thereto. The main housing 1110 of the compression module may be arranged to extend in a transverse direction. Both ends of the main housing 1110 may be entirely or partially open. For instance, a front end of the main housing 1110 is open, and a rear end of the main housing 1110 is partially open. Here, the front end of the housing 1110 refers to an end coupled to the inverter module 1200. Furthermore, the rear end of the housing 1110 refers to an end coupled to the rear housing 1120.

An inner diameter and an outer diameter of the main housing 1110 may not be constant. For instance, as illustrated in FIG. 1, the front end and the rear end may have an outer diameter larger than that of a middle portion between the front end and the rear end.

An intake port 1111 and a mount portion 1112 are arranged on an outer circumferential surface of the main housing 1110.

The intake port 1111 defines a passage for supplying fluid subject to compression to an inner space of the motor operated compressor 1000. The intake port 1111 may be protruded from an outer circumferential surface of the main housing 1110. The intake port 1111 may be connected to a suction pipe (not shown) for supplying fluid subject to compression to the motor operated compressor 1000. The intake port 1111 has a shape corresponding to the suction pipe to be coupled to the suction pipe.

The mount portion 1112 is a structure for fixing the motor operated compressor 1000 to an installation target region. The mount portion 1112 may protrude from an outer circumferential surface of the main housing 1110. The mount portion1112 may protrude from a circumferential surface of the main housing 1110. The mount portion 1112 may extend along a tangential direction of the outer circumferential surface of the main housing 1110.

The mount portion 1112 may have a fastening member coupling hole 1112a capable of coupling to any fastening member. The fastening member coupling hole 1112a may be opened toward the tangential direction of the outer circumferential surface of the main housing 1110. The mount portions 1112 may be arranged on one side and the other side of the main housing 1110, respectively. For instance, in FIG. 1, the mount portions 1112 are arranged on left and right sides and top and bottom sides of the main housing 1110, respectively.

The rear housing 1120 is provided on the other side of the main housing 1110 or on a rear side of the main housing 1110. The rear housing 1120 may be disposed to cover the rear side of the main housing 1110.

The rear housing 1120 includes a discharge port 1121, and a mount portion 1122.

The discharge port 1121 defines a passage for discharging fluid compressed in the motor operated compressor 1000 to the outside. The discharge port 1121 may protrude from an outer circumferential surface of the rear housing 1120. The discharge port 1121 may be connected to a discharge pipe (not shown) for supplying the compressed fluid to a next device of the cooling cycle. The discharge port 1121 has a shape corresponding to the discharge pipe to be coupled to the discharge pipe.

The mount portion 1122 is formed on a rear outer surface of the rear housing 1120. The mount portion 1122 may protrude from the rear outer surface of the rear housing 1120. The mount portion 1122 may extend in a vertical direction. The mount portion 1122 performs the substantially the same role as the mount portion 1112 of the main housing 1110.

The main housing 1110 and the rear housing 1120 may be coupled to each other by a plurality of fastening members 1123. The fastening members 1123 are inserted toward a side of the main housing 1110 from a side of the rear housing 1120. The plurality of fastening members 1123 may be provided along a circumference of the rear housing 1120.

A relief valve 1124 is provided in the rear housing 1120. The relief valve 1124 is provided to prevent high pressure fluid from flowing into a vehicle interior through the discharge port 1121 under abnormal situations. The relief valve 1124 may be disposed to be opened above a reference pressure. When an inside of the motor operated compressor 1000 is over-pressurized above a reference pressure due to an abnormal situation such as an accident in a vehicle mounted with the motor operated compressor 1000, the relief valve 1124 is opened. When the relief valve 1124 is opened, high pressure fluid is discharged to an outside of the motor operated compressor 1000 through the relief valve 1124.

Next, the inverter module1200 will be described.

An appearance of the inverter module 1200 is defined by an inverter housing 1210 and an inverter cover 1220.

The inverter housing 1210 and the inverter cover 1220 are coupled to each other to define a mounting space for circuit components and the like.

The inverter housing 1210 is disposed at a front end of the motor operated compressor 1000. One surface of the inverter housing 1210 is disposed to face the front of the motor operated compressor 1000 to define one outer wall of the motor operated compressor 1000. The inverter housing 1210 has a side wall, and the side wall protrudes toward the inverter cover 1220 along an edge of the one surface. The inverter housing 1210 may have an outer circumferential surface larger than that of the main housing 1110.

The inverter cover 1220 is coupled to the inverter housing 1210. The inverter cover 1220 may be configured in a plate shape that covers an opening portion of the inverter housing 1210 and a front end of the main housing 1110. The edge of the inverter cover 1220 may have a shape corresponding to the side wall of the inverter housing 1210.

The inverter housing 1210 and the inverter cover 1220 are coupled to each other by a plurality of fastening members 1215. The plurality of fastening members 1215 are inserted toward a side of the inverter cover 1220 from a side of the inverter housing 1210. The plurality of fastening members 1215 are provided at positions spaced apart from one another along a circumference of the inverter housing 1210.

The inverter cover 1220 is provided with a power connector 1241 and a communication connector 1242. The power connector 1241 and the communication connector 1242 are respectively arranged to be connected with different mating connectors. The power connector 1241 is configured to transfer power received from a mating connector to a circuit component. The communication connector 1242 electrically transmits a control command or the like transmitted from the outside to the circuit component to drive the motor operated compressor 1000 according to the control command.

Hereinafter, an internal structure of the motor operated compressor 1000 will be described.

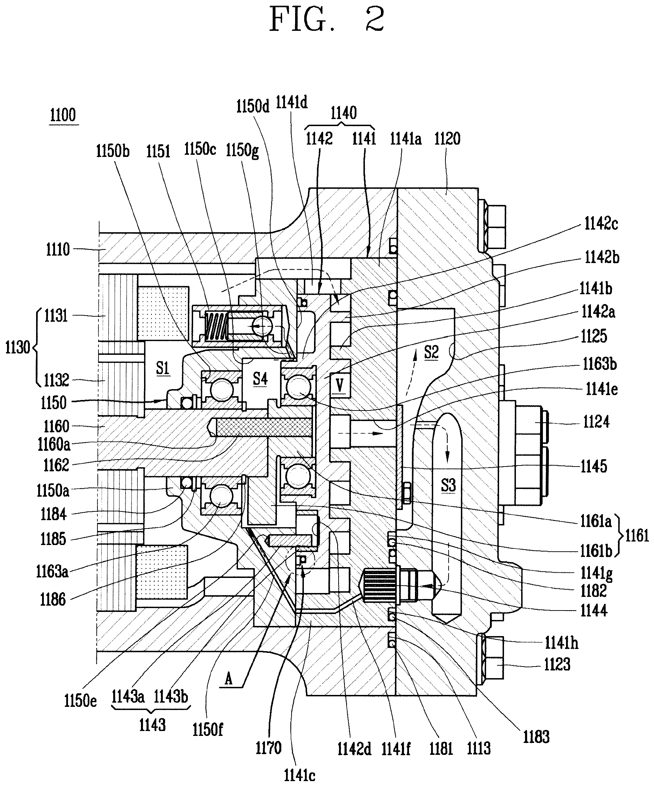

FIG. 2 is a cross-sectional view of the compression module 1100 illustrated in FIG. 1.

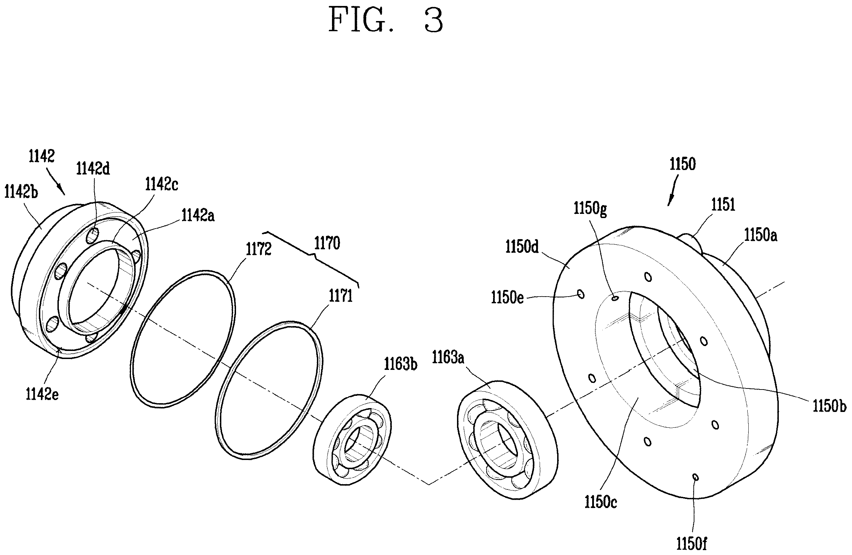

FIG. 3 is a partially exploded perspective view illustrating a configuration of the compression module 1100 illustrated in FIG. 2.

The motor operated compressor 1000 includes a compression module 1100 and an inverter module 1200.

The compression module 1100 may include a main housing 1110, a rear housing 1120, an electric motor unit 1130 (a drive portion or a drive motor), a compression unit 1140, a main frame 1150, a rotary shaft 1160, and a sealing member 1170.

First, the main housing 1110 will be described.

The main housing 1110 has a hollow cylindrical or polygonal pillar shape. Both front and rear ends of the main housing 1110 are open. Here, the front and rear ends are based on the flow of a fluid subjected to compression. For instance, the front end indicates a side of the inverter module 1200 side, and the rear end indicates a side of the rear housing 1120. The front end may be referred to as a first end, and the rear end may be referred to as a second end. The inverter module 1200 is coupled to the front end of the main housing 1110, and the rear housing 1120 is coupled to the rear end of the main housing 1110.

The main housing 1110 is provided with a sealing member receiving groove 1113. The sealing member receiving groove 1113 may be disposed along a circumference defined at the front end of the main housing 1110. The sealing member receiving groove 1113 is recessed in a closed curve shape. A recess direction of the sealing member receiving groove 1113 is a direction away from the rear housing 1120.

A sealing member 1181, such as an O-ring, is seated in the sealing member receiving groove 1113. The sealing member 1181 prevents a fluid subjected to compression from being leaked through a gap between the main housing 1110 and the rear housing 1120 and a gap between the main housing 1110 and the fixed scroll 1141.

The main housing 1110 defines a motor chamber (S1) together with the main frame 1150. The motor chamber (S1) denotes a space in which an electric motor unit 1130 is provided. The main housing 1110 is configured to accommodate the electric motor unit 1130 in the motor chamber (S1). The electric motor unit 1130 is seated in the motor chamber (S1) of the main housing 1110. In order to seal the motor chamber (S1), the inverter module 1200 is provided at the front end of the main housing 1110, and the main frame 1150 is provided inside the main housing 1110.

Next, the rear housing 1120 will be described.

The rear housing 1120 is coupled to the front end of the main housing 1110. The rear housing 1120 covers the front end of the main housing 1110. The rear housing 1120 is coupled to the main housing 1110 along a circumference defined at the front end of the main housing 1110.

The rear housing 1120 is disposed to face the fixed scroll 1141 of the compression unit 1140. A fixed end plate portion 1141a of the fixed scroll 1141 is coupled to the rear housing 1120 along a circumference defined at an edge of the rear housing 1120.

The rear housing 1120 has a recess portion 1125 on an inner side of the circumference defined at the edge of the rear housing 1120. The recess portion 1125 is spaced apart from the fixed end plate portion 1141a. A discharge chamber (S2) is disposed between the rear housing 1120 and the fixed end plate portion 1141a by the recess portion 1125.

The discharge chamber (S2) is configured to accommodate refrigerant discharged from the compression unit 1140. The discharge chamber (S2) refers to a space from which a fluid compressed at high pressure in the compression unit 1140 is discharged. The discharge chamber (S2) communicates with the discharge port 1121 described above with reference to FIG. 1. Therefore, the fluid compressed at high pressure is discharged to the discharge port 1121 through the discharge chamber (S2).

An oil separation chamber (S3) is disposed in the rear housing 1120. The fluid discharged to the discharge chamber (S2) includes oil for lubricating the moving components of the motor operated compressor 1000 as well as refrigerant subjected to compression. The oil separation chamber (S3) refers to a space for storing oil separated from refrigerant. The oil separation chamber (S3) is configured to store oil separated from refrigerant.

The oil separation chamber (S3) communicates with the discharge chamber (S2). When the refrigerant and the oil are discharged from the compression unit 1140, the refrigerant is discharged to the discharge port 1121, and the oil is separated from the refrigerant by an oil separator (not shown) to flow into the oil separation chamber (S3). The oil flowing into the oil separation chamber (S3) may be stored in the oil separation chamber (S3) and supplied to the back-pressure chamber (S4) for reuse through an oil guide passage which will be described later.

Next, the electric motor unit 1130 will be described.

The electric motor unit 1130 is configured to generate a driving force for performing an orbiting movement of the orbiting scroll 1142 of the compression unit 1140. The electric motor unit 1130 is composed of a drive motor. The drive motor is provided in the motor chamber (S1). The drive motor includes a stator 1131 and a rotor 1132.

The stator 1131 is provided on an inner circumferential surface of the main housing 1110. The stator 1131 is fixed to an inner circumferential surface of the main housing 1110. The stator 1131 is inserted and fixed to the main housing 1110 by heat shrinking (or hot pressing).

It is advantageous to assure the ease of assembly work of the stator that an insertion depth (or length) of the stator 1131 inserted into the main housing 1110 is set to be small (or shallow). Furthermore, it is advantageous to maintain the concentricity of the stator 1131 in the heat shrinking process of the stator 1131 that an insertion depth of the stator 1131 is set to be small.

The rotor 1132 is provided in an area enclosed by the stator 1131. When power is applied to the stator 1131, the rotor 1132 is rotated by electromagnetic interaction with the stator 1131.

Next, the compression unit 1140 will be described.

The compression unit 1140 is formed to compress fluid subject to compression such as refrigerant. The compression unit 1140 is disposed at a rear side of the electric motor unit 1130. The compression unit 1140 includes a fixed scroll 1141 and an orbiting scroll 1142. The compression unit 1140 is formed by the fixed scroll 1141 and the orbiting scroll 1141. The fixed scroll 1141 and the orbiting scroll 1142 may be referred to as a first scroll and a second scroll, respectively.

The fixed scroll 1141 and the orbiting scroll 1142 are arranged to face each other. The fixed scroll 1141 and the orbiting scroll 1141 are coupled to each other to form a pair of compression chambers (V). As the orbiting scroll 1141 performs an orbiting movement, a volume of the compression chamber is repeatedly changed, and thereby a fluid such as refrigerant is compressed in the compression chamber.

In an axial direction, the fixed scroll 1141 is disposed relatively far from the electric motor unit 1130, and the orbiting scroll 1142 is disposed relatively close to the electric motor unit 1130. The fixed scroll 1141 is disposed between the orbiting scroll 1142 and the rear housing 1120 in an axial direction. The orbiting scroll 1142 is disposed between the main frame 1150 and the fixed scroll 1141 in an axial direction.

The fixed scroll 1141 is seated inside the main housing 1110. An outer circumferential surface of the fixed scroll is in contact with an inner circumferential surface of the main housing. The fixed scroll 1141 is supported by the main housing 1110 in a radial direction of the rotary shaft 1160. Furthermore, the fixed scroll 1141 is supported by the rear housing 1120 in an axial direction of the rotary shaft 1160.

The detailed structure of the fixed scroll 1141 will be described below.

The fixed scroll 1141 includes a fixed end plate portion 1141a, a fixed wrap 1141b, a side wall portion 1141c, a fluid suction passage 1141d, a fluid discharge passage 1141e, and an oil guide passage 1141f.

The fixed end plate portion 1141a is formed in a plate shape. An outer circumferential surface of the fixed end plate portion 1141a is formed in a shape corresponding to an inner circumferential surface of the main frame 1150. For example, an outer diameter of the fixed end plate portion 1141a is substantially the same as an inner diameter of the main frame 1150. Accordingly, the fixed end plate portion 1141a may be press-fitted into the main frame 1150.

The fixed end plate portion 1141a is disposed to face the orbiting end plate portion 1142a at a position spaced apart from the orbiting end plate portion 1142a of the orbiting scroll 1142. The fixed end plate portion 1141a may be in close contact with the rear housing 1120. When the fixed end plate portion 1141a is in close contact with the rear housing 1120, the discharge chamber (S2) is defined by the recess portion 1125 of the rear housing 1120.

When a surface facing the rear housing 1120 is referred to as a first surface, and a surface facing the orbiting scroll 1142 is referred to as a second surface, between both surfaces of the fixed end plate portion 1141a, the first surface is provided with sealing member receiving grooves 1141g, 1141h, and the second surface is provided with a fixed wrap 1141b.

The sealing member receiving grooves 1141g, 1141h are recessed in a closed curve shape on the first surface of the fixed end plate portion 1141a. A recess direction of the sealing member receiving grooves 1141g, 1141 h is a direction away from the rear housing 1120. Sealing members having a closed curve shape such as O-rings are seated on the sealing member receiving grooves 1141g, 1141h.

A sealing member 1182 seated in either one 1141g of the two sealing member receiving grooves 1141g, 1141h of the fixed end plate portion 1141a seals the discharge chamber (S2). This sealing member 1182 wraps the discharge chamber (S2) in a circumferential direction of the fixed end plate portion 1141a.

A sealing member 1183 seated in the other one 1141h of the two sealing member receiving grooves 1141g, 1141h of the fixed end plate portion 1141a seals a circumference of the decompression member 1144. The sealing member 1183 wraps the decompression member 1144 in a circumferential direction of the fixed end plate portion 1141a.

The sealing member receiving grooves 1141g, 1141h are not necessarily disposed in the fixed end plate portion 1141a. For example, the sealing member receiving grooves 1141g, 1141h may be disposed in the rear housing 1120.

The fixed wrap 1141b protrudes toward the orbiting scroll 1142 in an involute curve, an arithmetic spiral (Archimedes spiral) or an algebraic spiral (logarithmic spiral) shape. The involute curve denotes a curve corresponding to a trajectory drawn by an end portion of a thread when the thread wound around a base circle having an arbitrary radius is unwound so as not to be loosened. The arithmetic spiral refers to a trace drawn by a moving point when the moving point is moved away from a fixed reference point at a constant speed along a straight line rotating at a constant angular velocity about the reference point. Furthermore, the algebraic spiral is a curve that follows a constant logarithmic function in polar coordinates. The fixed wrap 1141b may be formed in various other shapes.

The fixed wrap 1141b is engaged with the orbiting wrap 1142b to form a pair of compression chambers (V). The fixed wrap 1141b is inserted between the orbiting wraps 1142b, and the orbiting wrap 1142b is inserted between the fixed wraps 1141b.

The side wall portion 1141c protrudes in an annular shape toward the orbiting scroll 1142 along an outer edge of the fixed end plate portion 1141a. The side wall portion 1141c is configured to surround the fixed wrap 1141b in a radial direction of the rotary shaft 1160.

An outer circumferential surface of the side wall portion 1141c is in close contact with an inner circumferential surface of the main housing 1110. Accordingly, the fixed scroll 1141 may be fixed to an inner side of the main housing 1110.

A protruding end portion of the side wall portion 1141c may be in surface contact with the main frame 1150. The main frame 1150 has a thrust surface 1150d corresponding to the orbiting scroll 1142, and an end portion of the side wall portion 1141c is in close contact with the thrust surface 1150d. As the annular-shaped side wall portion 1141c comes into close contact with the thrust surface 1150d of the main frame 1150, a seating space of the orbiting scroll 1142 is formed between the fixed scroll 1141 and the main frame 1150.

The fluid suction passage 1141d is formed at one side of the side wall portion 1141c. The fluid suction passage 1141d is opened toward a radial direction of the rotary shaft 1160. The side wall portion 1141c may be partially spaced apart from an inner circumferential surface of the main frame 1150, and the fluid suction passage 1141d communicates with the motor chamber (S1) and the compression chamber (V). Accordingly, a fluid subjected to compression is introduced into the compression chamber (V) through the fluid suction passage 1141d in the motor chamber (S1), and is compressed by the compression unit 1140 in the compression chamber (V).

The fluid discharge passage 1141e passes through the fixed end plate portion 1141a in an axial direction of the rotary shaft 1160. The fluid discharge passage 1141e communicates with the compression chamber (V) and the discharge chamber (S2). The fluid compressed in the compression chamber (V) is discharged to the discharge chamber (S2) through the fluid discharge passage 1141e.

A discharge valve 1145 that opens and closes the fluid discharge passage 1141e may be provided in the fixed end plate portion 1141a. The discharge valve 1145 is configured to be passively opened above a reference pressure and to be passively closed below the reference pressure. As the compression of the refrigerant subjected to compression is carried out in the compression unit 1140, the discharge valve 1145 is opened when the pressure of the compression chamber (V) exceeds the predetermined pressure.

The oil guide passage 1141f passes through the fixed end plate portion 1141a and the side wall portion 1141c. The oil guide passage 1141f is configured to receive oil from the oil separation chamber (S3) through the decompression member 1144 and guide the received oil to the back-pressure chamber (S4).

Decompression member receiving grooves are located at positions where the rear housing 1120 and the fixed end plate portion 1141a face each other while in contact with each other. One side of the decompression member 1144 is inserted into the decompression member receiving groove disposed at a side of the rear housing 1120, and the other side of the decompression member 1144 is inserted into the decompression member receiving groove disposed at a side of the fixed end plate portion 1141a.

The decompression member 1144 is configured to depressurize oil supplied from the oil separation chamber (S3). Oil at a discharge pressure stored in the oil separation chamber (S3) is depressurized to a medium pressure by the decompression member 1144. The intermediate pressure refers to a pressure higher than a suction pressure corresponding to a pressure prior to the compression of the fluid and lower than a discharge pressure corresponding to a pressure subsequent to the compression of the fluid. An orifice or the like may be used for the decompression member 1144.

The sealing member 1183 may be provided in a radial direction of the decompression member 1144. The sealing member 1183 is defined in an annular shape like an O-ring, and is inserted into the sealing member receiving groove 1141h disposed at the fixed end plate portion 1141a or the rear housing 1120.

One end of the oil guide passage 1141f disposed at the fixed scroll 1141 communicates with an outlet of the decompression member 1144, and the other end of the oil guide passage 1141f communicates with an oil guide passage 1150f of the main frame 1150. Oil supplied to the oil guide passage 1150f of the main frame 1150 through the oil guide passage 1141f of the fixed scroll 1141 is supplied to the back-pressure chamber (S4) through the oil guide passage 1150f of the main frame 1150. The oil supplied to the back-pressure chamber (S4) lubricates an outer circumferential surface of the rotary shaft 1160 exposed to the back-pressure chamber (S4) to define a back pressure of the back-pressure chamber (S4).

The orbiting scroll 1142 is illustrated in both FIG. 2 and FIG. 3. The orbiting scroll 1142 is seated on the thrust surface 1150d of the main frame 1150. The orbiting scroll 1142 is supported by the main frame 1150 in an axial direction. The orbiting scroll 1142 defines a compression chamber (V) together with the fixed scroll 1141. The orbiting scroll 1142 is configured to perform an orbiting movement with respect to the fixed scroll 1141 to compress the fluid.

The orbiting scroll 1142 includes an orbiting end plate portion 1142a, an orbiting wrap 1142b, a driving force transmission portion 1142c, a rotation prevention mechanism mounting groove 1142d, and a groove 1142e.

The orbiting end plate portion 1142a is configured in a plate shape corresponding to the fixed end plate portion 1141a. Since the orbiting end plate portion 1142a must perform an orbiting movement within a region surrounded by the main housing 1110, an outer diameter of the orbiting end plate portion 1142a is smaller than an inner diameter of the main housing 1110.

The orbiting end plate portion 1142a may have an outer diameter smaller than the side wall portion 1141c of the fixed scroll 1141. Accordingly, the orbiting end plate portion 1142a may be seated on the fixed wrap 1141b of the fixed scroll 1141. The orbiting end plate portion 1142a and the fixed wrap 1141b may define a thrust surface.

When a surface facing the fixed scroll 1141 is referred to as a first surface, and a surface facing the main frame 1150 is referred to as a second surface, between both surfaces of the orbiting end plate portion 1142a, the orbiting wrap 1142b is disposed on the first surface, and the driving force transmission portion 1142c, the rotation prevention mechanism mounting groove 1142d, and the groove 1142e are disposed on the second surface.

Since the orbiting end plate portion 1142a is supported by the main frame 1150 in an axial direction of the rotary shaft, a thrust surface corresponding to the thrust surface 1150d of the main frame 1150 is also defined on the second surface of the orbiting end plate portion 1142a.

The orbiting wrap 1142b protrudes from the first surface of the orbiting end plate portion 1142a toward the second scroll 1141. Similar to the fixed wrap 1141b, the orbiting wrap 1142b may have an involute curve, an arithmetic spiral (Archimedes spiral), or an algebraic spiral (logarithmic spiral) shape. The orbiting wrap 1142b may be formed in various other shapes.

The orbiting wrap 1142b may be in close contact with the fixed end plate portion 1141a. Similarly, the fixed wrap 1141b may also be in close contact with the orbiting end plate portion 1142a. At least one of an axial end of the fixed wrap 1141b and an axial end of the orbiting wrap 1142b may be provided with a tip chamber (not shown) to seal the compression chamber (V).

The driving force transmission portion 1142c protrudes in an annular shape toward the main frame 1150 from the second surface of the orbiting end plate portion 1142a. The driving force transmitting portion 1142c may be disposed at the center of the second surface. The driving force transmission portion 1142c is configured to accommodate a balance weight 1161 and a ball bearing 1163b coupled to the balance weight 1161.

A driving force generated by the electric motor unit 1130 is transmitted to the driving force transmission portion 1142c through the rotary shaft 1160, the rotation prevention mechanism 1143, and the ball bearing 1163b. The orbiting scroll 1142 performs an orbiting movement by a driving force transmitted through the driving force transmission portion 1142c.

The rotation prevention mechanism mounting groove 1142d is disposed on the second surface of the orbiting end plate portion 1142a. The rotation prevention mechanism mounting groove 1142d is defined by being recessed in a circular shape along an axial direction on the second surface of the orbiting end plate portion 1142a. A recess direction of the rotation preventing mechanism mounting groove 1142d is a direction toward the fixed scroll 1141. A plurality of rotation preventing mechanism mounting grooves 1142d is provided. The plurality of rotation prevention mechanism mounting grooves 1142d are located at positions spaced apart from one another along a virtual circumference of the second surface. The virtual circumference is larger than the circumference of the driving force transmission portion 1142c.

The rotation prevention mechanism mounting groove 1142d is configured to accommodate the rotation prevention mechanism 1143. A pin 1143a and a ring 1143b that define the rotation prevention mechanism 1143 may be inserted into the rotation prevention mechanism mounting groove 1142d.

The groove 1142e is disposed on the second surface of the orbiting end plate portion 1142a. The groove 1142e is defined by being recessed in an annular shape along an axial direction on the second surface of the orbiting end plate portion 1142a. A recess direction of the groove 1142e is a direction toward the fixed scroll 1141.

The groove 1142e may have a larger circumference than a virtual circumference described in the rotation prevention mechanism mounting groove 1142d. The groove 1142e is disposed between the outermost edge of the orbiting end plate portion 1142a and the driving force transmission portion 1142c, and between the outermost edge of the orbiting end plate portion 1142a and the rotation prevention mechanism mounting groove 1142d in a radial direction of the rotary shaft 1160.

Since the second surface of the orbiting end plate portion 1142a faces the main frame 1150, the groove 1142e disposed on the second surface of the orbiting end plate portion 1142a also faces the main frame 1150. The groove 1142e is defined in a closed curve shape around the back-pressure chamber (S4) to accommodate the sealing member 1170 that seals the back-pressure chamber (S4), which will be described later.

The groove 1142e does not necessarily have to be defined on the orbiting end plate portion 1142a. The groove 1142e may also be disposed on the main frame 1150. In this case, the groove (not shown) is defined on the thrust surface 1150d of the main frame 1150, and is recessed toward a direction away from the orbiting scroll 1142. Furthermore, the groove (not shown) faces the orbiting end plate portion 1142a of the orbiting scroll 1142.

The groove 1142e is configured to accommodate the first sealing member 1171 and a second sealing member 1172 that seal the back-pressure chamber (S4). The first sealing member 1171 and the second sealing member 1172 will be described later.

Next, the rotation prevention mechanism 1143 will be described.

The rotation prevention mechanism 1143 is configured to prevent the rotation of the orbiting scroll 1142 and to perform an orbiting movement on the orbiting scroll 1142. When there is no rotation prevention mechanism 1143, the orbiting scroll 1142 will be rotated by a driving force transmitted through the rotary shaft 1160 or the like. When the orbiting scroll 1142 rotates, fluid cannot be compressed, and the orbiting scroll 1142 must perform an orbiting movement with respect to the fixed scroll 1141 to compress the fluid. The rotation prevention mechanism 1143 prevents the rotation of the orbiting scroll 1142 to perform an orbiting movement on the orbiting scroll 1142.

The rotation prevention mechanism 1143 may be configured with a plurality of pins and rings.

Each ring 1143b is inserted one by one into each rotation prevention mechanism mounting groove 1142d of the orbiting scroll 1142. Both opening sides of the ring 1143b are disposed to face front and rear sides of the motor operated compressor 1000, respectively. A direction toward the front and rear sides of the motor operated compressor 1000 refers to an extension direction of the rotary shaft 1160.

The pin 1143a is disposed to face the front and rear sides of the motor operated compressor 1000. Each pin 1143a is inserted into a pin receiving groove 1150e of the main frame 1150 one by one. The pin receiving groove 1150e may be located at a position facing the rotation preventing mechanism mounting groove 1142d of the orbiting scroll 1142. When an end inserted into the pin receiving groove 1150e is a rear end of the pin 1143a, a front end of the pin 1143a is inserted into a region surrounded by the ring 1143b.

When a driving force is transmitted to the orbiting scroll 1142 through the rotary shaft 1160 or the like, the orbiting scroll 1142 moves within a region defined by the rotation prevention mechanism 1143. As a result, the rotation of the orbiting scroll 1142 is prevented, and the orbiting scroll 1142 may perform an orbiting movement.

The rotation prevention mechanism 1143 is not necessarily configured with pins and rings, but may also be configured with various mechanisms such as an oldham ring.

Next, the main frame 1150 will be described.

The main frame 1150 is configured to support the orbiting scroll 1142 to perform an orbiting movement in an axial direction of the rotary shaft 1160. The main frame 1150 is disposed at an opposite side to the fixed scroll 1141 around the orbiting scroll 1142 to define the back-pressure chamber (S4) together with the orbiting scroll 1142.

An inner circumferential surface of the main housing 1110 includes a stepped portion 1114. The main frame 1150 is seated on the stepped portion 1114. When a rear inner diameter and a front inner diameter of the stepped portion 1114 are compared with each other, the rear inner diameter is smaller than the front inner diameter. Accordingly, the main frame 1150 may be seated on the stepped portion 1114.

The main frame 1150 includes a rotary shaft receiving portion 1150a, a ball bearing mounting portion 1150b, a back-pressure chamber side wall portion 1150c, a thrust surface 1150d, a pin receiving groove 1150e, an oil guide passage 1150f, and an overpressure prevention passage 1150g.

The rotary shaft receiving portion 1150a is configured to surround the rotary shaft 1160. An inner circumferential surface of the rotary shaft receiving portion 1150a is in contact with an outer circumferential surface of the rotary shaft 1160 to define a bearing surface with an outer circumferential surface of the rotary shaft 1160. The rotary shaft receiving portion 1150a is configured to to support the rotary shaft 1160 in a radial direction of the rotary shaft 1160.

The ball bearing mounting portion 1150b defines a step in an axial direction with respect to the rotary shaft receiving portion 1150a. When compared in the axial direction of the rotary shaft 1160, the ball bearing mounting portion 1150b is disposed at a front side of the rotary shaft 1160 relative to the rotary shaft mounting portion 1150a. The ball bearing mounting portion 1150b may be configured to surround the rotary shaft 1160 at a position spaced apart from the rotary shaft 1160. The ball bearing mounting portion 1150b extends in a radial direction of the rotary shaft 1160 to support a ball bearing 1163a in an axial direction of the rotary shaft 1160, and extends in an axial direction of the rotary shaft 1160 to support the ball bearing 1163a in the radial direction of the rotary shaft 1160.

The back-pressure chamber side wall portion 1150c has a step with respect to the ball bearing mounting portion 1150b. When compared in the axial direction of the rotary shaft 1160, the back-pressure chamber side wall portion 1150c is disposed at a front side of the rotary shaft 1160 relative to the ball bearing mounting portion 1150b. The back-pressure chamber side wall portion 1150c extends along an axial direction of the rotary shaft 1160 to define a side wall of the back-pressure chamber (S4) in a radial direction of the rotary shaft 1160. The back-pressure chamber side wall portion 1150c may be configured to surround the rotary shaft 1160 at a position spaced apart from the rotary shaft 1160. A radial separation distance based on the rotary shaft 1160 is greater in the back-pressure chamber side wall portion 1150c than in the ball bearing mounting portion 1150b.

The thrust surface 1150d is configured to face the orbiting scroll 1142. The thrust surface 1150d is in contact with the orbiting end plate portion 1142a of the orbiting scroll 1142. The thrust surface 1150d is configured to support the orbiting scroll 1142 in an axial direction. The orbiting scroll 1142 may be defined in an annular shape.

The pin receiving groove 1150e is disposed on the thrust surface 1150d. A plurality of pin receiving grooves 1150e are formed around the hole of the main frame 1150 through which the rotary shaft 1160 passes. The plurality of pin receiving grooves 1150e are located at positions spaced apart from one another along a virtual circumference. The pin receiving groove 1150e accommodates the pin 1143a of the rotation prevention mechanism 1143.

An inlet of the oil guide passage 1150f is located at a position facing the oil guide passage 1141f of the fixed scroll 1141. Furthermore, an outlet of the oil guide passage 1150f is exposed through the back-pressure chamber side wall portion 1150c. Therefore, oil supplied to the oil guide passage 1150f of the main frame 1150 through the oil guide passage 1141f of the fixed scroll 1141 supplied to the back-pressure chamber (S4) through the oil guide passage 1150f of the main frame 1150.

An overpressure prevention passage 1150g is disposed in the back-pressure chamber side wall portion 1150c. An overpressure prevention valve 1151 may be provided at the back-pressure chamber side wall portion 1150c to be opened above a reference pressure. An inlet of the overpressure prevention passage 1150g is exposed to the back-pressure chamber side wall portion 1150c, and an outlet of the overpressure prevention passage 1150g is exposed to a region provided with the overpressure prevention valve 1151. When the pressure of the back-pressure chamber (S4) abnormally rises to be over-pressurized, the overpressure prevention valve 1151 is opened to discharge high pressure oil from the back-pressure chamber (S4) to the motor chamber (S1).

Next, the rotary shaft 1160 will be described.

The rotary shaft 1160 extends from a front side to a rear side of the motor operated compressor 1000. A direction in which the rotary shaft 1160 extends is an axial direction of the rotary shaft 1160.

A rear end of the rotary shaft 1160 is coupled to the rotor 1132. The rotary shaft 1160 is inserted and fixed to the rotor 1132 by a heat shrinking (or hot pressing) method.

A front end of the rotary shaft 1160 is coupled to the balance weight 1161. Accordingly, the rotary shaft 1160 transmits a rotational force generated by the drive motor to the balance weight 1161 while rotating together with the rotor 1132.

A portion between the rear end and the front end of the rotary shaft 1160 passes through the main frame 1150. The rotary shaft 1160 is supported by the rotor 1132 in an axial direction. The rotary shaft 1160 is supported by the main frame 1150 in a radial direction.

A sealing member 1184, a first release preventing member 1185, a ball bearing 1163a, and a second release preventing member 1186 may be coupled to an outer circumferential surface of the rotary shaft 1160. The sealing member 1184 is provided to seal the motor chamber (S1) and the back-pressure chamber (S4) from each other. The sealing member 1184 may be formed as an O-ring that surrounds the rotary shaft 1160. The sealing member 1184 is supported by the main frame 1150 and the first release preventing member 1185 in an axial direction.

The first release preventing member 1185 is disposed at a front side of the sealing member 1184. The first release preventing member 1185 is configured to prevent the sealing member 1184 from being axially released toward a front end of the rotary shaft 1160. In order to prevent the sealing member 1184 from being released, the first release preventing member 1185 is in close contact with the sealing member 1184 in an axial direction. The first release preventing member 1185 may be formed as a C-ring that surrounds the rotary shaft 1160. A groove may be disposed on an inner circumferential surface of the main frame 1150 to accommodate an outer edge of the first release preventing member 1185.

The ball bearing 1163a is configured to surround the rotary shaft 1160. The ball bearing 1163a is seated on the ball bearing mounting portion 1150b of the main frame 1150. The ball bearing 1163a is supported by the main frame 1150 in an axial direction of the rotary shaft 1160.

The second release preventing member 1186 is disposed at a front side of the ball bearing 1163a. The second release preventing member 1186 is configured to prevent the ball bearing 1163a from being axially released toward a front end of the rotary shaft 1160. The second release preventing member 1186 is in close contact with the ball bearing 1163a in an axial direction to prevent the ball bearing 1163a from being released. The second release preventing member 1186 may be formed as a C-ring that surrounds the rotary shaft 1160. A groove may be disposed on an outer circumferential surface of the rotary shaft 1160 to accommodate an inner edge of the second release preventing member 1186.

A front end of the rotary shaft 1160 is coupled to the balance weight 1161. The balance weight 1161 is provided to cancel an eccentric load (or eccentric amount) of the rotary shaft 1160. The balance weight 1161 includes an eccentric portion 1161a and a mass portion 1161b.

The eccentric portion 1161a is located at a position corresponding to the rotary shaft 1160 in an axial direction so as to be coupled to the rotary shaft 1160 in the axial direction. The eccentric portion 1161a may be formed in a cylindrical shape similarly to the rotary shaft 1160. However, a diameter of the eccentric portion 1161a is smaller than that of the rotary shaft 1160. The eccentric portion 1161a is coupled to a position eccentric from a position facing the center of the rotary shaft 1160.

The eccentric portion 1161a is coupled to a front end of the rotary shaft 1160 by a connecting pin 1162. The connecting pin 1162 is disposed to face an axial direction of the rotary shaft 1160 to pass through both the rotary shaft 1160 and the eccentric portion 1161a. Connection pin receiving portions 1160a for accommodating the connection pins 1162 may be formed in the eccentric portion 1161a and the rotary shaft 1160, respectively.

The connecting pin 1162 passes through at least one of the eccentric portion 1161a and the rotary shaft 1160 at a position eccentric from the center to allow the eccentric portion 1161a to be eccentrically disposed from the center of the rotary shaft 1160. For instance, in FIG. 2, it is illustrated that the connecting pin 1162 inserted into the rotary shaft 1160 at a position eccentric from the center of the rotary shaft 1160. On the other hand, the connecting pin 1162 passes through the center of the eccentric portion 1161a.

When the rotary shaft 1160 rotates together with the rotor 1132, the rotary shaft 1160 rotates in place, but the eccentric portion 1161a eccentrically coupled to the rotary shaft 1160 is eccentrically rotated. The orbiting scroll 1142 that receives a driving force by the eccentric portion 1161a and the ball bearing 1163b performs an orbiting movement.

The mass portion 1161b extends primarily from an edge of the eccentric portion 1161a toward a radial direction of the rotary shaft 1160, and further extends secondarily toward an axial direction of the rotary shaft 1160. The primary extension of the mass portion 1161b does not face all 360° around the eccentric portion 1161a, but extends in a fan shape having a constant center angle. Furthermore, the secondary extension of the mass portion 1161b extends in an arc shape corresponding to the center angle. The secondary extension portion may surround the rotary shaft 1160 by a range corresponding to the center angle.

The ball bearing 1163b is coupled to an outer circumferential surface of the eccentric portion 1161a. Furthermore, the driving force transmission portion 1142c of the orbiting scroll 1141 is coupled to an outer circumferential surface of the ball bearing 1161a. Accordingly, the orbiting scroll 1142 is disposed at a position eccentric from the center of the rotary shaft 1160 in an axial direction.

Hereinafter, the operation of the motor operated compressor 1000 will be described.

First, a fluid subjected to compression flows into the motor chamber (S1) through the suction port 1111 described with reference to FIG. 1. When a current or voltage is applied to the drive motor, the rotor 1132 is rotated by electromagnetic interaction with the stator 1131. When the rotor 1132 rotates, the rotary shaft 1160 connected to the rotor 1132 also rotates. When the rotary shaft 1160 rotates, the balance weight 1161 coupled to a front end of the rotary shaft 1160 and the ball bearing 1163b coupled to the eccentric portion 1161a of the balance weight 1161 are also eccentrically rotated.

When the balance weight 1161 and the ball bearing 1163b are eccentrically rotated, the orbiting scroll 1142 coupled to the ball bearing 1163b performs an orbiting movement by the rotation prevention mechanism 1143. When the orbiting scroll 1142 performs an orbiting movement with respect to the fixed scroll 1141, the operation of increasing and decreasing a volume of the compression chamber (V) is repeated. Accordingly, a fluid subjected to compression introduced into the compression chamber (V) from the motor chamber (S1) is compressed.

When the pressure of the compression chamber (V) rises above a reference pressure, the discharge valve 1145 is opened. The fluid sufficiently compressed by the compression unit 1140 in the compression chamber (V) is discharged to the discharge chamber (S2) through the fluid discharge flow path 1141e disposed in the fixed scroll 1141. Oil contained in the fluid compressed at high pressure is separated from refrigerant and stored in the oil separation chamber (S3), and the refrigerant is discharged from the motor operated compressor 1000 through the discharge port.

The high-pressure oil stored in the oil separation chamber (S3) is depressurized to an intermediate pressure by the decompression member 1144 while passing through the decompression member 1144. The oil depressurized to the intermediate pressure is supplied to the back-pressure chamber (S4) through the oil guide passage 1141f of the fixed scroll 1141 and the oil guide passage 1150f of the main frame 1150 to define a back pressure. In addition, since the rotary shaft 1160 is exposed to the back-pressure chamber (S4), the oil lubricates an outer circumferential surface of the rotary shaft 1160.

The airtightness of the back-pressure chamber (S4) is implemented by a sealing member 1184 coupled to an outer circumferential surface of the rotary shaft 1160, and two sealing members 1171, 1172 disposed between the orbiting scroll 1142 and the main frame 1150. However, unlike low pressure refrigerant, in the motor operated compressor 1000 having high pressure refrigerant such as carbon dioxide as a fluid subjected to compression, pressure and temperature differences between the inside and the outside with respect to the back-pressure chamber (S4) is relatively large. Therefore, when a gap between an outer wall of the groove 1142e and the first sealing member 1171 is not set to an appropriate value, a pinching problem of the first sealing member 1171 and the second sealing member 1171 occurs, thereby deteriorating the airtight effect of the back-pressure chamber (S4) and the durability of the motor operated compressor 1000.

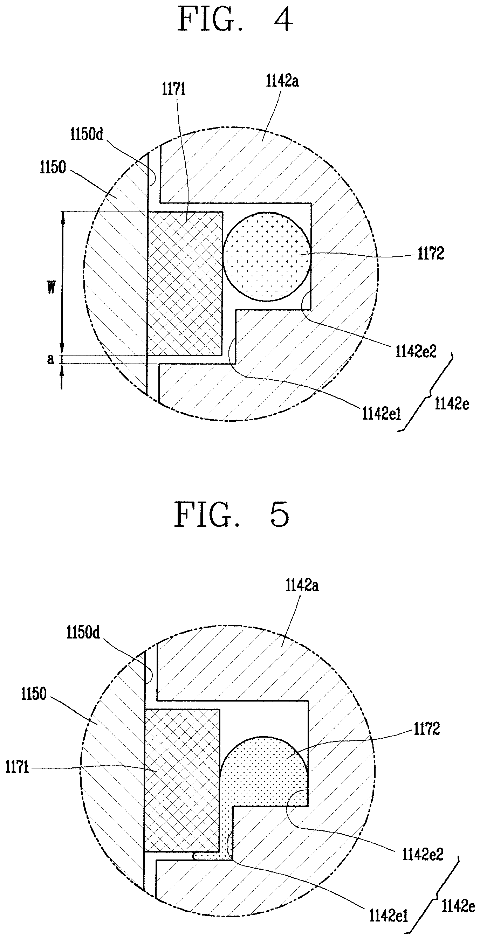

This will be described with reference to FIGS. 4 through 6.

FIG. 4 is a cross-sectional view of portion "A" illustrated in FIG. 2.

First, the structure of the portion "A" will be described. The first sealing member 1171 and the second sealing member 1172 are inserted into the groove 1142e.

The groove 1142e includes a first groove 1142e1 and a second groove 1142e2 that are separated from each other by an axial depth.

The first groove 1142e1 is recessed toward a direction away from the main frame 1150 on one surface of the orbiting scroll 1142. At this time, one surface of the orbiting scroll 1142 refers to a second surface of the orbiting end plate portion 1142a. Alternatively, the first groove 1142e1 may be recessed toward a direction away from the orbiting scroll 1142 on one surface of the main frame 1150. In this case, one surface of the main frame 1150 refers to the thrust surface 1150d of the main frame 1150.

The first groove 1142e1 is recessed in an annular shape. Furthermore, the first sealing member 1171 is also defined in an annular shape corresponding to the first groove 1142e1. The first sealing member 1171 is inserted into the first groove 1142e1 to seal the back-pressure chamber (S4).

The second groove 1142e2 is disposed on the same object as the first groove 1142e1. When the first groove 1142e1 is disposed in the orbiting scroll 1142, the second groove 1142e2 is also disposed in the orbiting scroll 1142. When the first groove 1142e1 is disposed in the main frame 1150, the second groove 1142e2 is also disposed in the main frame 1150.

The second groove 1142e2 is recessed from the first groove 1142e1 toward the same direction as the recess direction of the first groove 1142e1. For instance, the first groove 1142e1 is recessed primarily on one side of the orbiting scroll 1142 or the main frame 1150, and the second groove 1142e2 is recessed secondarily on the first groove 1142e1 to have a larger depth.

The second groove 1142e2 is recessed in an annular shape. Furthermore, the second sealing member 1172 is also defined in an annular shape corresponding to the second groove 1142e2. The second sealing member 1172 elastically pressurizes the first sealing member 1171 to be inserted into the second groove 1142e2 so that the first sealing member 1171 is in close contact with the orbiting scroll 1142 or the main frame 1150.

The first sealing member 1171 is made of engineering plastic for the airtightness of the back-pressure chamber (S4). For example, the first sealing member 1171 is made of polyetherether ketone (PEEK) or polytetrafluoroethylene (PTFE).

In contrast, the second sealing member 1172 is made of an elastic member capable of elastically pressing the first sealing member 1171. For example, the second sealing member 1172 may be made of rubber. The second sealing member 1172 may be made of fluorine rubber among rubbers. Furthermore, the second sealing member 1172 may be made of fluorine rubber corresponding to a material symbol FKM of the ASTM 1418 standard among fluorine rubbers. The second sealing member 1172 should not be too hard to pressurize the first sealing member 1171, and may have a Brinell hardness (HB) of 70 to 100 for this purpose.

The first sealing member 1171 is defined in a closed curved annular shape, but the cross section thereof is rectangular as illustrated in FIG. 4. On the contrary, the second sealing member 1172 is defined in a closed curved annular shape, the cross section thereof is circular as illustrated in FIG. 4. For instance, the second sealing member 1172 may be configured with an O-ring.

As described above, since the shapes of the first sealing member 1171 and the second sealing member 1172 are different from each other, an outer diameter of the first groove 1142e1 and an outer diameter of the second groove 1142e2 may be different from each other. For instance, since the cross section of the first sealing member 1171 is rectangular, the axial length and the radial length of the first sealing member 1171 may be freely set.

On the contrary, since the cross section of the second sealing member 1172 is circular, the radial length of the second sealing member 1172 increases when the axial length increases as long as the second sealing member 1172 maintains the circular cross section. Therefore, an outer diameter of the second groove 1142e2 must be smaller than that of the first groove 1142e1 in order not to excessively increase a size of the second sealing member.

Here, an outer diameter of each groove 1142e indicates a distance from the center of the fixed end plate portion to an outer wall of each groove with respect to the radial direction of the rotary shaft 1160. Similarly, an inner diameter of each groove 1142e indicates a distance from the center of the fixed end plate portion to an inner wall of each groove with respect to the radial direction of the rotary shaft 1160.

In addition, when the outer diameter of the first groove 1142e1 and the outer diameter of the second groove 1142e2 are the same, and the inner diameter of the first groove 1142e1 and the inner diameter of the second groove 1142e2 are the same, the second sealing member 1172 may be sandwiched between the first sealing member 1171 and the orbiting scroll 1142 in the radial direction of the rotary shaft 1160. Therefore, the sizes of the first grooves 1142e1 and the second grooves 1142e2 are preferably different from each other.

In particular, since the outer diameter of the first groove 1142e1 is an element causing a decrease in the airtightness effect of the first sealing member 1171 and the second sealing member 1172, the outer diameters of the first groove 1142e1 and the second groove 1142e2 must be different. In order not to excessively increase the second sealing member 1172, the outer diameter of the first groove 1142e1 is preferably larger than that of the second groove 1142e2. In this case, a step is naturally disposed between the first groove 1142e1 and the second groove 1142e2. On the contrary, the inner diameters of the first groove 1142e1 and the second groove 1142e2 may be the same.

In the groove 1142e and the sealing member structure as described above, when the following conditions are satisfied, the durability and airtight performance of the first sealing member 1171 and the second sealing member 1172 may be reduced.
(1) A fluid subjected to compression is high pressure refrigerant such as carbon dioxide, and the motor operated compressor 1000 is configured to compress the high-pressure refrigerant.
(2) The first sealing member 1171 is made of an engineering plastic material such as PEEK or PTFE.
(3) The second sealing member 1172 is made of a material having an elastic force, such as fluorine rubber. The second sealing member 1172 is defined in a closed curved annular shape without disconnection in a circumferential direction. For example, a C-ring does not satisfy this condition.
(4) A relative size of the first groove 1142e1 to the first sealing member 1171 in the radial direction of the rotary shaft 1160 is out of a specific range.

Here, the specific range is determined by 1) a size (W) of the first sealing member 1171 in the radial direction of the rotary shaft 1160, 2) and a gap (a) between an outer wall of the first groove 1142e1 defining the outer diameter of the first groove and the first sealing members 1171.

First, when an outer radius of the first sealing member 1171 in a radial direction of the rotary shaft 1160 is "OR", and an inner radius of the first sealing member 1171 is "IR", a size of the first sealing member 1171 in a radial direction of the rotary shaft 1160 corresponds to a difference between "OR" and "IR" (W = OR - IR).

When a distance between an outer wall of the first groove 1142e1 and the first sealing member 1171 in a radial direction of the rotary shaft 1160 is "a", a relative ratio (a/W) of "a" and "W" must be 0.06 to 0.08 not to cause the degradation of durability and airtight performance of the first sealing member 1171 and the second sealing member 1172. Instance, the specific range denotes that the "a" is within 6 to 8% of the "W".

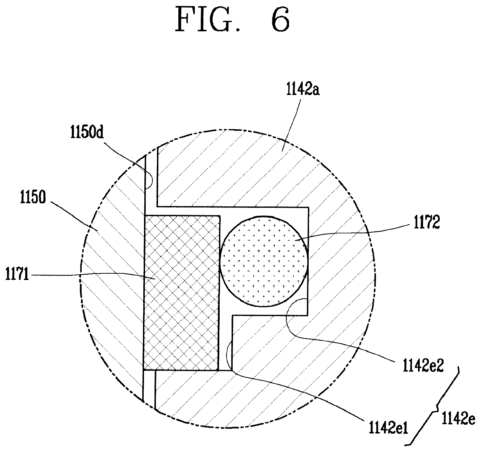

On the contrary, when a relative size between the first groove 1142e1 and the first sealing member 1171 deviates from a specific range, the durability and airtight performance of the first sealing member 1171 and the second sealing member 1172 may be reduced. This will be described with reference to FIGS. 5 and 6.

FIGS. 5 and 6 are cross-sectional views for explaining the problem of a motor operated compressor that does not have a structure proposed in the present disclosure.

First, when the relative ratio (a/W) exceeds 8%, a pinching phenomenon may occur that the second sealing member 1172 made of rubber is partially inserted between an outer wall of the first groove 1142e1 and the first sealing member 1171 as illustrated in FIG. 5 under a specific low load condition among various vehicle air conditioner operating conditions. As a result, the second sealing member 1172 loses durability and naturally causes a decrease in airtight performance.

On the contrary, when the relative ratio (a/W) is less than 6%, a phenomenon may occur that the first sealing member 1171 is pinched into the first groove 1142e1 as illustrated in FIG. 6 under a specific high load condition among various vehicle air conditioner operating conditions. This is because a thermal expansion rate of the first sealing member 1171 is larger than that of the orbiting scroll 1142 made of aluminum or the like. As a result, the first sealing member 1171 loses durability and naturally causes a decrease in airtight performance.

In order to prevent the occurrence of such a phenomenon, a relative size between the first groove 1142e1 and the first sealing member 1171 in a radial direction of the rotary shaft 1160 must be manufactured so as not to deviate from the specific range described above.

The configurations and methods according to the above-described embodiments will not be limited to the foregoing motor operated compressor, and all or part of each embodiment may be selectively combined and configured to make various modifications thereto.

According to the present disclosure having the above configuration, even under a condition of a high pressure fluid, a first sealing member made of engineering plastic, and a second sealing member made of rubber, it may be possible to prevent the first sealing member or the second sealing member from being pinched into a gap of the orbiting scroll or the main frame.

Therefore, according to the present disclosure, even the motor operated compressor operates for a long time, the first sealing member or the second sealing member may maintain an original position, and may not cause the degradation of durability.

Moreover, according to the present disclosure, even when the motor operated compressor operates for a long time, the first sealing member and the second sealing member do not lose airtight performance.

## Claims

1. A motor operated compressor, comprising:
an orbiting scroll (1142) that defines a compression chamber (V) together with a fixed scroll (1141), and performs an orbiting movement with respect to the fixed scroll (1141) to compress a fluid;
a main frame (1150) disposed to support the orbiting scroll (1142) to perform an orbiting movement and disposed at a side opposite to the fixed scroll (1141) around the orbiting scroll (1142) to define a back-pressure chamber (S4) together with the orbiting scroll (1142);
a groove (1142e) disposed in either one of the orbiting scroll (1142) and the main frame (1150) to face the other one of the orbiting scroll (1142) and the main frame (1150), and defined in a closed curved shape around the back-pressure chamber (S4);
a first sealing member (1171) inserted into the groove (1142e) to seal the back-pressure chamber (S4); and
a second sealing member (1172) inserted into the groove (1142e) to elastically press the first sealing member (1171) to be brought into close contact with the orbiting scroll (1142) or the main frame (1150),
wherein a distance a between an outer wall of the groove (1142e) and the first sealing member (1171) in a radial direction of the first sealing member (1171) is 6 to 8% (0.06 ≦ a/W ≦ 0.08) of a difference W between an outer radius OR and an inner radius IR of the first sealing member (1171).

2. The motor operated compressor of claim 1, wherein the groove (1142e) comprises:
a first groove (1142e1) recessed in a direction away from one of the orbiting scroll (1142) and the main frame (1150) on one surface of the other one of the orbiting scroll (1142) and the main frame (1150); and
a second groove (1142e2) recessed on the first groove (1142e1) in the same direction as the recess direction of the first groove (1142e1), the second groove (1142e2) being disposed to have an outer diameter different from that of the first groove (1142e1), and
wherein the first sealing member (1171) is inserted into the first groove (1142e1), and
the second seal member (1172) is inserted into the second groove (1142e2).

3. The motor operated compressor of claim 2, wherein an outer diameter of the first groove (1142e1) is greater than that of the second groove (1142e2).

4. The motor operated compressor of claim 2, or 3, wherein an inner diameter of the first groove (1142e1) is the same as that of the second groove (1142e2).

5. The motor operated compressor of any one of claims 1 to 3, wherein a fluid subject to compression in the motor operated compressor comprises carbon dioxide.

6. The motor operated compressor of any one of claims 1 to 5, wherein the first sealing member (1171) is made of engineering plastic.

7. The motor operated compressor of claim 6, wherein the first sealing member (1171) is made of polyetherether ketone, PEEK.

8. The motor operated compressor of claim 6, wherein the first sealing member (1171) is made of polytetrafluoroethylene, PTFE.

9. The motor operated compressor of any one of claims 1 to 8, wherein the first sealing member (1171) is defined in a closed curved annular shape.

10. The motor operated compressor of any one of claims 1 to 9, wherein the second sealing member (1172) is made of rubber.

11. The motor operated compressor of claim 10, wherein the second sealing member (1172) is made of fluorine rubber.

12. The motor operated compressor of claim 11, wherein the second sealing member (1172) is made of fluorine rubber corresponding to a material symbol FKM of the ASTM 1418 standard among fluorine rubbers.

13. The motor operated compressor of any one of claims 1 to 12, wherein the second sealing member (1172) has a Brinell hardness (HB) of 70 to 100.
